## Europäisches Patentamt

## European Patent Office

## Office européen des brevets

(11) Publication number: **0 180 753**
**B1**

# EUROPEAN PATENT SPECIFICATION

(45) Date of publication of patent specification: **05.04.89**

(51) Int. Cl.⁴: **H 02 K 23/54, H 02 K 5/24**

(21) Application number: **85112113.7**

(22) Date of filing: **25.09.85**

(54) Axial gap type core-less electric motor.

(30) Priority: **26.09.84 JP 200864/84**

(43) Date of publication of application:
**14.05.86 Bulletin 86/20**

(45) Publication of the grant of the patent:
**05.04.89 Bulletin 89/14**

(84) Designated Contracting States:
**DE FR GB**

(56) References cited:
**DE-B-1 023 131**
**US-A-3 737 697**
**PATENT ABSTRACTS OF JAPAN, vol. 5, no. 167**
**(E-79)839r, 24th October 1981; & JP - A - 56**
**94938 (MATSUSHITA DENKI SANGYO K.K.)**
**31-07-1981**
**PATENT ABSTRACTS OF JAPAN, vol. 3, no. 71**
**(E-118), 20th June 1979, page 93 E 118; JP - A -**
**54 50906 (HITACHI SEISAKUSHO K.K.) 21-04-**
**1979**

(73) Proprietor: **Matsushita Electric Industrial Co.,
Ltd.
1006, Oaza Kadoma
Kadoma-shi Osaka-fu, 571 (JP)**

(72) Inventor: **Ueda, Takemi
Koyousokushin-Jyutaku 1-505
8-5, Oshio-cho 2-chome Takefu City, 915 (JP)**
Inventor: **Umezawa, Norio
2-8, Fujimigaoka 2-chome
Takefu City, 915 (JP)**

(74) Representative: **Dr. Elisabeth Jung Dr. Jürgen
Schirdewahn Dipl.-Ing. Claus Gernhardt
P.O. Box 40 14 68 Clemensstrasse 30
D-8000 München 40 (DE)**

Courier Press, Leamington Spa, England.

# EP 0 180 753 B1

**Description**

## 1. Field of the invention

The invention relates to a core-less electric motor having an axial gap and being drivable by a direct current power source, especially being thin so as to be usable as a blower of a car-radiator or of a driving source of a copy machine etc.

An axial gap type core-less electric motor had recently been made flat but there is a further demand to make such motor thinner, lighter and/or lower in acoustic noise and lower in cost so as to be usable as part of cars or of a copying machine.

First, two embodiments of the hypothetical (internal prior art) conventional axial gap type core-less electric motors are explained with reference to the accompanying drawings 415 and 617 respectively. The preamble of claim 1 is built according to the Fig. 415 embodiment.

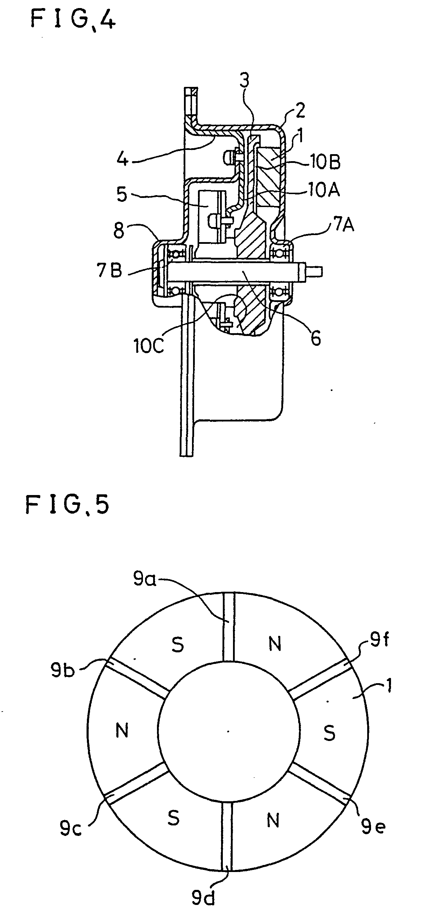

Fig. 4 is a cross-sectional side view of a first embodiment of such a hypothetical conventional core-less electric motor. As shown in Fig. 5, a doughnut shaped field magnet 1 is alternately magnetized N and S in rotational direction, and it is fixed on the inside wall of an outer frame bracket 2 by using an adhesive, or the like. A core-less armature 3 has a flat disk shape and is disposed against the field magnet 1 with a little gap inbetween. An inner frame bracket 4 which also serves as a magnetic yoke is disposed against the armature 3 with a little gap inbetween. A brush 5 which is used for feeding an electric current to the armature 3 is fixed on the inner frame bracket 4. A shaft 6 which is connected with the armature 3 is held by a bearing cover 8 through bearings 7A and 7B.

Fig. 5 is a front view of the field magnet 1 of the electric motor according to Fig. 4.

As shown in Fig. 5, the field magnet 1 has radial non-magnetized parts 9a, 9b, 9c, 9d, 9e, 9f and 9g between the magnetic poles. Magnetic flux flows in a path from an N-pole of the field magnet 1, through a gap 10A, the armature 3, a gap of the inner frame bracket 4, a gap 10B, the armature 3, a gap 10C, an S-pole of the field magnet 1, the outer frame bracket 2 and to the N-pole of the field magnet 1 in Fig. 4. When being fed with an electric current through the brush 5, the armature 3 begins to rotate in accordance with Fremings' rule. As mentioned above, the conventional core-less electric motor has already an axial gap for reducing its thickness. It is, however, not capable of being further reduced in its thickness because of the fact that the field magnet 1 and the brush 5 are disposed sticked in the axial direction.

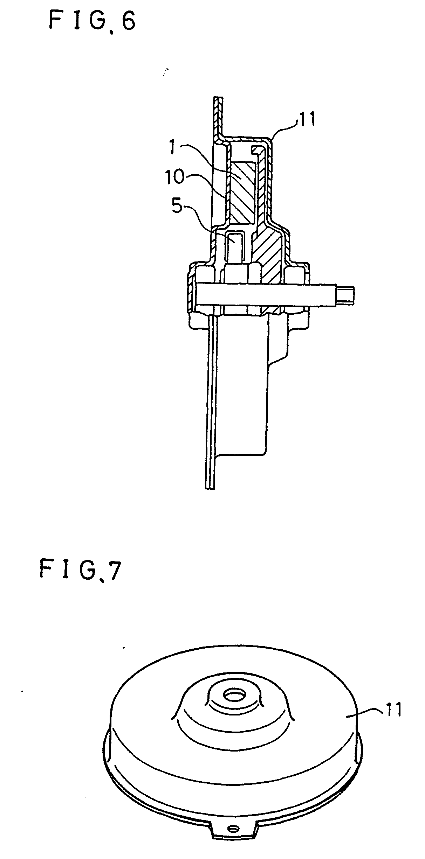

Fig. 6 is a cross-sectional side view of another embodiment of a hypothetical conventional core-less electrcc motor.

As shown in Fig. 6, the core-less electric motor has a brush 5 and a field magnet 1 disposed in a concentric relation with respect to the axis of an armature 3 for reducing the thickness of the motor, and an inner frame bracket 10, an inner frame bracket 4 and a bearing cover 8 are integrated in one body, as already shown in Fig. 4, to reduce its weight. In this case, the flow of the magnetic flux uses the outer frame bracket 11 and the inner frame braket 10 as the magnetic yoke similarly to the core-less electric motor in Fig. 4. In such a case, the reaction of the armature 3 caused by feeding an electric current makes the magnetic flux of the field magnet 1 non-uniform, and thereby when looking at a point on the surface of the outer frame bracket 11 which is disposed against the field magnet 1, periodical non-uniformity of the intensity of the magnetic field with respect to time is caused. Resultantly, strain which is determined by rigidity of the outer frame bracket 11 induces periodical non-uniformity as time lapses, so that acoustic noise due to magnetic oscillation is produced from the outer frame bracket 11.

In such embodiments of hypothetical conventional core-less electric motor, to reduce the acoustic noise and the stress, trials have been made to reduce the thickness of the frame, but such trials had resulted in a problem of heavy weight of the apparatus.

Core-less electric motors which are similar to the above described two embodiments of hypothetical electric motors were already published as JP—A—5 694 938 or US—A—3 737 697 without overcoming the problems mentioned with respect to the hypothetical embodiments of an internal prior art.

Accordingly, the purpose of the present invention is to provide an improved core-less electric motor, especially an axial gap type core-less electric motor, which is super-thin in thickness, super-light in weight, and low in acoustic noise and low in cost.

An axial gap type core-less electric motor comprising,

a flat disk type core-less armature rotatably disposed with a little gap against a field magnet, and

a frame bracket which is also serving as a magnetic yoke and is disposed on the opposite side of said armature against said field magnetic with a predetermined small gap inbetween, according to the invention is characterised in that said frame bracket has radial ribs formed radially on the outer face of said frame bracket and centering around a rotor shaft which is connected with said armature.

Fig. 1(a) is a schematical front view of a frame bracket of a preferred embodiment of an axial gap type core-less electric motor in accordance with the invention.

Fig. 1(b) is a schematical cross-sectional side view of a preferred embodiment of an axial gap type core-less motor in accordance with the invention.

Fig. 2 is a schematical perspective view of a frame bracket of another preferred embodiment of an axial gap type core-less electric motor in accordance with the invention.

Fig. 3 is a schematical perspective view of still another preferred embodiment of an axial gap type core-less motor in accordance with the invention.

2

Fig. 4 is the schematical cross-sectional side view of one embodiment of a hypothetical conventional core-less electric motor.

Fig. 5 is the schematical front view of the field magnet of the conventional core-less electric motor of Fig. 4.

Fig. 6 is the schematical cross sectional side view of another embodiment of a hypothetical conventional core-less electric motor.

Fig. 7 is a schematical perspective view of the frame bracket of the conventional core-less electric motor of Fig. 6.

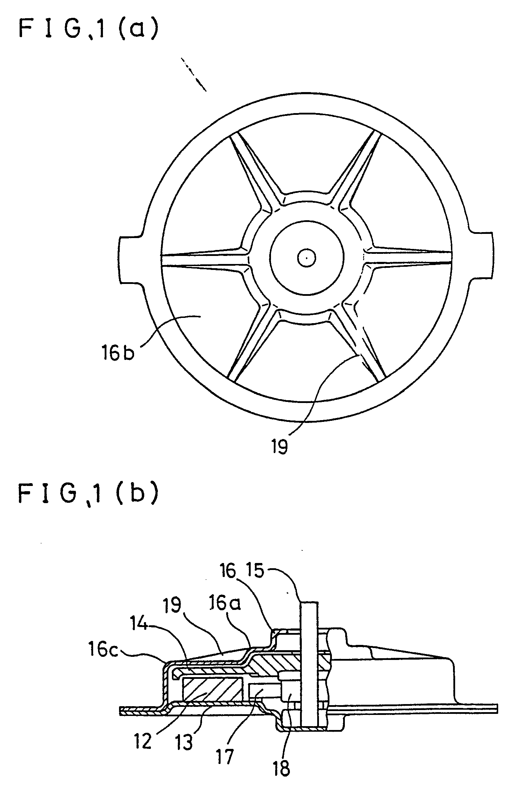

Preferred embodiments are described with reference to the Figs. 1(a), 1(b), 2 and 3.

As shown in Fig. 1(b), an axial gap type core-less electric motor comprisers an inner frame bracket 13, a doughnut shaped field magnet 12 which is fixed on the inside wall of the inner frame bracket 13 by using an adhesive or the like, a flat disk type core-less armature 14 which is disposed against the field magnet 12 with a small gap inbetween, a rotor shaft 15 which is connected with the armature 14, an outer frame bracket 16 which also serves as a magnetic yoke which is disposed against the armature 14 with a little gap, and having radial ribs 19 around the rotor shaft 15 on the opposite side on which the field magnet 12 is fixed, a pair of brushes 17 which are fixed on the inner frame bracket 13, and a commutator 18 which is mounted on the armature 14, the brushes 17 being operatively engaged with the commutator 18. In this case the frame brackets 13 and 16 are made of a magnetic substance such as iron. The ribs 19 have a tapered shape with respect to their heights and their widths. Their heights are gradually lower extending radially from the outside face of a housing 16a which holds a bearing to the peripheral part 16c of the flat yoke part 16b. Also, the widths of the ribs 19 are formed tapering gradually narrower from the outside face of the housing 16a to the peripheral part 16c.

In the following, the operation of the axial gap type core-less electric motor is explained.

The field magnet 12 has radial non-magnetized parts, similarly to the conventional core-less electric motor according to Fig. 5.

The magnetic flux from the N-pole of the field magnet 12 flows through the armature 14, enters the outer frame bracket 16, passes through the outer frame bracket 16, passes through the outer frame bracket 16 to the part facing an S-pole of the field magnet 12, passes through the armature 14 again, enters another S-pole of the field magnet 12 and passes through the inner frame bracket 13 to the part facing an N-pole of the field magnet 12. When an electric current is fed through the brush 17 to the commutator 18, the rectified current is flowing to the armature 14 and the armature 14 is beginning to rotate.

Thereby, the armature reaction is generated by the current passing through the armature 14, and the magnetic power which acts upon the outer frame bracket 16 becomes active. The outer frame bracket 16 however, is enforced by the radial ribs 19; the enforcement by the ribs 19 results in a high rigidity and the strain due to changing of magnetic source becomes little. Accordingly, the acoustic noise radiated from the motor can be drastically reduced.

A result of the improvement achieved in accordance with the invention is shown in Table 1 in comparison with the conventional apparatus.

Fig. 7 shows the outer frame bracket of a conventional core-less electric motor which as no rib.

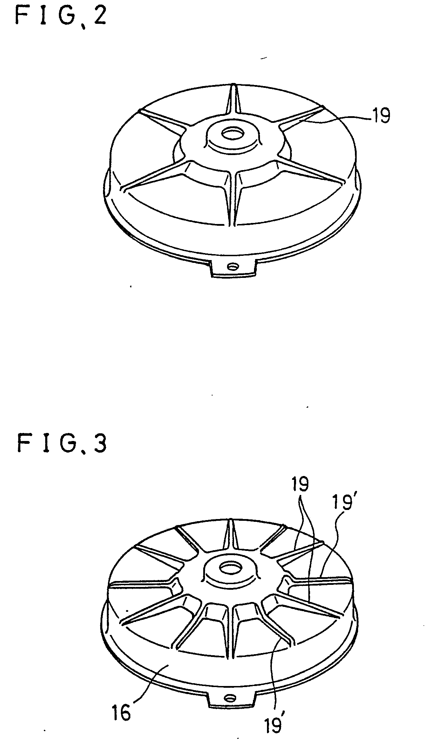

Fig. 2 shows the outer frame bracket 16 of an embodiment in accordance with the invention having the radial ribs 19 arranged with an angular path of 60 degrees, and in this case the positions of the ribs 19 are corresponding to the non-magnetized parts 9a to 9f of the field magnet 1 in Fig. 5.

Fig. 3 shows the outer frame bracket 16 of another embodiment in accordance with the invention having the radial ribs 19 and sub-ribs 19' alternately with an angular pitch of 30 degrees, and in this case the sub-ribs 19' are disposed on respective centers of the magnetic poles. Table 1 shows the displacements of the working points when impressing a concentrated load in a direction parallel to the axis of the motor on a virtual circle having an intermediate diameter, which is equal to an intermediate diameter, between the outer diameter and the inner diameter of the field magnet 12 on the opposite side on which the field magnet 12 is fixed.

TABLE 1

| Shape of the outer frame bracket | Conventional examples of Fig. 7 (no ribs) | Embodiment of Fig. 2 (with 6 ribs) | Embodiment of Fig. 3 (with 12 ribs) |
|---|---|---|---|
| Displacement | 8.18 [μm] | 2.30 [μm] | 2.20 [μm] |

Accordingly, the rigidity of the embodiment shown in Fig. 2, which has six ribs 19, is 8.18/2.3 times larger in comparison with that of the conventional frame-bracket shown in Fig. 7. The rigidity of the embodiment in Fig. 3 which has six sub-ribs 19' between the ribs 19 of the embodiment in Fig. 2 is still larger. The torque T which rotates the armature 14 is proportional to the magnetic flux which flows from the field magnet 12 and the electric current I which flows through the armature 14. By selecting the positions of the radially formed ribs 19 to be formed at the parts above the non-magnetized radial parts 9a, 9b, 9c, 9d, 9e and 9f of the doughnut-shaped field magnet 12, there is no problem of a decrease of the permanence of the magnetic circuit due to the existence of gaps between the surface of the field magnet 12 and the inside face of the outer frame bracket 16 at the parts of the radial ribs. Therefore, such forming of the ribs does not give rise to any necessity of increasing of the input electric power.

Moreover, by disposing the sub-ribs 19', which have generally narrower widths than the ordinally ribs 19, locally above the intermediate higher positions of each rib 19, namely above the radii centers of each magnetic pole of the field magnet 12, in addition to the ribs 19, the rigidity of the yoke at the part above the pole centers of the field magnet 12 where the magnetic flux density is the largest, can be much increased. Consequently the total rigidity of the outer frame bracket 16, which causes acoustic noise, can be strengthened by the noise is effectively minimized.

The sub-ribs 19, cooperating with the ordinary ribs 19, strengthen the rigidity as shown in Table 1, and the noise reduction effect is remarkable.

Table 2 shows measured noise values of a conventional core-less electric motor without ribs of Fig. 7, that of the embodiment of the present invention of Fig. 2 and that of another embodiment of the present invention of Fig. 3. The apparatuses of these examples are designed such that the field magnet 12 which is magnetized forms six magnetic poles.

TABLE 2
(Noise values measured in a characteristic curve of the noise meter)

| Shape of the outer frame bracket | Conventional examples of Fig. 7 (no rib) | Embodiment of Fig. 2 (with 6 ribs) | Embodiment of Fig. 3 (with 12 ribs) |
|---|---|---|---|
| Noise value | 58 [dB] | 54 [dB] | 52 [dB] |

Instead of the above-mentioned examples of the invention, wherein the field magnet 12 has six magnet poles, the field magnet can be designed to have other numbers of magnet poles; such changed embodiments may show the same effect.

**Claims**

1. An axial gap type core-less electric motor comprising
a flat disk type core-less armature rotatably disposed with a little gap against a field magnet, and
a frame bracket (16) which is also serving as a magnetic yoke and is disposed on the opposite side of said armature (14) against said field magnet (12) with a predetermined small gap inbetween, characterized in that
said frame bracket has radial ribs (19) formed radially on the outer face of said frame bracket (16) and centering around a rotor (15) which is connected with said armature (14).

2. An axial gap type core-less electric motor in accordance with claim 1, wherein
said ribs (19) are disposed over non-magnetized parts of said field magnet.

3. An axial gap type core-less electric motor in accordance with claim 1, wherein
said ribs (19) are disposed over non-magnetized parts of said field magnet (9a—9f) (in fig. 5), and further comprise sub-ribs (19') which are also disposed radially between said radial ribs (19), hence, over parts of center lines of magnet poles of said field magnet.

4. An axial gap type core-less electric motor in accordance with claim 1, claim 2 or claim 3, wherein
said ribs (19) have a tapered shape, their heights being gradually lower from the center to the peripheral part (16c) of said frame bracket (16).

5. An axial gap type core-less electric motor in accordance with one of the claims 1 to 4, wherein
said ribs (19) have a tapered shape, their widths being gradually narrower from the center to the peripheral part (16c) of said frame bracket (16).

**Patentansprüche**

1. Kernloser elektrischer Motor mit Achsluftspalt, umfassend
einen ebenen scheibenartigen kernlosen Anker, der mit einem geringen Spalt gegenüber einem Feldmagneten drehbar angeordnet ist und
einen Rahmentragteil (16), der auch als magnetisches Joch dient und auf derjenigen Seite des Ankers (14), die von dem Feldmagneten (12) abgewandt ist, mit einem vorbestimmten kleinen Spalt gegenüber dem Anker angeordnet ist, dadurch gekennzeichnet, daß
der Rahmentragteil radiale Rippen (19) aufweist, die an der Außenfläche des Rahmentragteils (16) radial gebildet und rund um eine Rotorwelle (15) zentriert sind, die mit dem Anker (14) verbunden ist.

2. Kernloser elektrischer Motor mit Achsluftspalt nach Anspruch 1, wobei die Rippen (19) über nicht magnetisierten Teilen des Feldmagneten angeordnet sind.

3. Kernloser elektrischer Motor mit Achsluftspalt nach Anspruch 1, wobei die Rippen (19) über nicht magnetisierten Teilen des Feldmagneten (9a—9f) (in Fig. 5) angeordnet sind und weiter Unterrippen (19') aufweisen, die ebenfalls radial zwischen den radialen Rippen (19) und demgemäß über Teilen von Mittellinien von Magnetpolen des Fledmagneten angeordnet sind.

4. Kernloser elektrischer Motor mit Achsluftspalt nach Anspruch 1, Anspruch 2 oder Anspruch 3, wobei die Rippen (19) eine sich verjüngende Gestalt haben, deren Höhen von der Mitte zum Umfangsteil (16c) des Rahmentragteils (16) allmählich geringer werden.

5. Kernloser elektrischer Motor mit Achsluftspalt nach einem der Ansprüche 1 bis 4, wobei die Rippen (19) eine sich verjüngende Gestalt haben, deren Breiten von der Mitte zum Umfangsteil (16c) des Rahmenlagerteils (16) allmählich kleiner werden.

**Revendications**

1. Moteur électrique sans noyau du type à entrefer axial comprenant:
une armature sans noyau du type à disque plat, disposée en rotation avec un petit entrefer contre un aimant; et
un support (16) du bâti qui sert également de culasse magnétique et est disposé sur le côté opposé de l'armature (14) contre l'aimant (12), un petit entrefer prédéterminé les séparant; caractérisé en ce que:
le support du bâti comporte des nervures radiales (19) formées radialement sur la face extérieure du support (16) du bâti et sont centrées sur un arbre (15) de rotor qui est relié à l'armature (14).

2. Moteur électrique sans noyau du type à entrefer axial selon la revendication 1, dans lequel:
les nervures (19) sont disposées sur des parties non aimantées de l'aimant.

3. Moteur électrique sans noyau du type à entrefer axial selon la revendication 1, dans lequel:
les nervures (19) sont disposées sur des parties non-aimantées de l'aimant (9a—9f) (en figure 5), et comprennent en outre des sous-nervures (19') qui sont également disposées radialement entre les nervures radiales (19), par conséquent, sur des parties des axes des pôles de l'aimant.

4. Moteur électrique sans noyau du type à entrefer axial selon la revendication 1, la revendication 2 ou la revendication 3, dans lequel:
les nervures (19) ont une forme chanfreinée, leur hauteur diminuant progressivement entre le centre et la partie périphérique (16c) du support (16).

5. Moteur électrique sans noyau du type à entrefer axial selon l'une des revendications 1 à 4, dans lequel:
les nervures (19) one une forme chanfreinée, leur largeur diminuant progressivement entre le centre et la partie périphérique (16c) du support (16).

# FIG.1 (a)

16b

19

# FIG.1 (b)

16 15
16a
19
14
16c
12 13 17 18

1

FIG.2

19

FIG.3

19

19′

16

19′

FIG.4

FIG.5

FIG.6

FIG.7

4